(19) Europäisches Patentamt
European Patent Office
Office européen des brevets

(11) **EP 4 692 181 A1**

(12) **EUROPEAN PATENT APPLICATION**
published in accordance with Art. 153(4) EPC

(43) Date of publication:
**11.02.2026 Bulletin 2026/07**

(21) Application number: **24779010.8**

(22) Date of filing: **28.02.2024**

(51) International Patent Classification (IPC):
**C08J 5/18** (2006.01)   **B32B 27/36** (2006.01)
**C08G 63/16** (2006.01)

(52) Cooperative Patent Classification (CPC):
**B32B 27/36; C08G 63/16; C08J 5/18**

(86) International application number:
**PCT/JP2024/007310**

(87) International publication number:
**WO 2024/202870 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023 JP 2023048171**

(71) Applicant: **Toyobo Co., Ltd.**
**Kita-ku**
**Osaka-shi, Osaka 530-0001 (JP)**

(72) Inventors:
• **INAGAKI, Jun**
**Otsu-shi, Shiga 520-0292 (JP)**
• **MORI, Mei**
**Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **POLYESTER FILM**

(57)   It is provided that a polyester film in which: furandicarboxylic acid derived from biomass is used; the content of the cyclic dimer is low; and transparency of the polyester film is less likely to decrease even when the polyester film is heated. A polyester film comprising: a dicarboxylic acid component having furandicarboxylic acid as a main component; and a glycol component having ethylene glycol as a main component, the polyester film satisfying requirements (1) to (3) below,
(1) a plane orientation coefficient $\Delta P$ is 0.100 or more and 0.170 or less,
(2) a haze of the polyester film is 15% or less, and
(3) when the haze of the polyester film is defined as $Hz_0$ (%) and the haze after the polyester film is heated at 150°C for 30 minutes is defined as $HZ_{30}$ (%), $Hz_{30}$-$Hz_0 \leq 15$ is satisfied.

EP 4 692 181 A1

**Description**

TECHNICAL FIELD

The present invention relates to a polyester film having a furandicarboxylic acid unit.

BACKGROUND ART

Polyester resins such as polyethylene terephthalate (PET) and polybutylene terephthalate (PBT), which are thermoplastic resins excellent in heat resistance and mechanical properties, have been used in a very wide variety of fields such as plastic films, electronics, energy, packaging materials, and automobiles. Among plastic films, biaxially stretched PET films have been used widely for industrial and packaging fields because of their excellent balance between cost and mechanical characteristics, heat resistance, dimensional stability, chemical resistance, optical characteristics, etc.

In recent years, from the viewpoint of reducing dependency on petroleum, resins using raw materials derived from biomass, which is an environmentally-sustainable material, have attracted attention. Polyethylene furanoate (PEF) has furandicarboxylic acid (FDCA) derived from biomass and has a planar structure, and thus, has attracted attention as a renewable resin that can be expected to have heat resistance equivalent to, or more than, that of conventional petroleum-derived resins such as polyethylene terephthalate (PET). In addition, in PEF, it is easy to use raw materials derived from biomass for both a carboxylic acid component and a diol component.

There has been a proposal for a polyester film in which a resin including a dicarboxylic acid component having furandicarboxylic acid as a main component and a glycol component having ethylene glycol as a main component is biaxially stretched, so that the polyester film has a plane orientation coefficient in a specific range and has mechanical strength and dimensional stability that allow usage for industries and packaging (Patent Document 1).

CITATION LIST

PATENT DOCUMENTS

Patent Document 1: Japanese Patent No. 6440336
Patent Document 2: Japanese Laid-Open Patent Publication No. 2022-155579

SUMMARY OF THE INVENTION

PROBLEMS TO BE SOLVED BY THE INVENTION

Although Patent Document 1 shows a polyester film that has excellent mechanical strength, it was found that there is a problem that, when the polyester film is heat-treated, the film is whitened. Therefore, it was found that it is difficult to use the polyester film in usages that require a high degree of transparency, such as food packaging films and optical usages.

The present inventors speculate that a low-molecular-weight component contained in the polyester film leads to whitening of the film. As a polyester resin in which the amount of a cyclic dimer, which is a low-molecular-weight component, has been reduced, Patent Document 2 discloses a polyester resin that has a 2,5-furandicarboxylic acid unit and an ethylene glycol unit, for example, and manufacturing a polyester film using the polyester resin of Patent Document 2 is conceivable.

However, in the polyester resin described in Patent Document 2, the amount of the cyclic dimer has not been sufficiently reduced. In addition, when a film is to be manufactured, the polyester resin is remelted in a melt extrusion step, but there is a problem that the cyclic dimer is generated in a large amount when the polyester resin is remelted. In the film manufactured from the polyester resin described in Patent Document 2, the cyclic dimer contained in the polyester resin precipitates on the film surface during heating, and thus significant whitening is observed on the film. Therefore, it is difficult to use the film as an industrial film or a packaging film.

An object of the present invention is to provide a polyester film in which: furandicarboxylic acid derived from biomass is used; the content of the cyclic dimer is low; and transparency of the polyester film is less likely to decrease even when the polyester film is heated.

SOLUTION TO THE PROBLEMS

That is, the present invention has the following invention.

[1] A polyester film comprising: a dicarboxylic acid component having furandicarboxylic acid as a main component; and a glycol component having ethylene glycol as a main component, the polyester film satisfying requirements (1) to (3) below,

(1) a plane orientation coefficient $\Delta P$ is 0.100 or more and 0.170 or less,
(2) a haze of the polyester film is 15% or less, and
(3) when the haze of the polyester film is defined as $Hz_0$ (%) and the haze after the polyester film is heated at 150°C for 30 minutes is defined as $Hz_{30}$ (%), $Hz_{30} - Hz_0 \leq 15$ is satisfied.

[2] The polyester film according to the above [1], further satisfying requirement (4) below,
(4) a content of a cyclic dimer is 1.0 mass% or less.
[3] The polyester film according to the above [1], further satisfying requirements (5) and (6) below,

(5) the polyester film has a laminate configuration of three layers or more, and
(6) at least one surface, a content of a cyclic dimer is 1.0 mass% or less.

EFFECTS OF THE INVENTION

The polyester film of the present invention is a polyester film that has a furandicarboxylic acid unit derived from biomass, but in which the content of the cyclic dimer is low, and transparency of the polyester film is less likely to decrease even when the polyester film is heated. Thus, the polyester film can be suitably used as an industrial film or a packaging film.

DESCRIPTION OF EMBODIMENTS

The polyester film of the present invention includes a dicarboxylic acid component having furandicarboxylic acid as a main component, and a glycol component having ethylene glycol as a main component. That is, the polyester film of the present invention is manufactured by using a polyethylene furandicarboxylate-based resin mainly containing furandicarboxylic acid as the dicarboxylic acid component and mainly containing ethylene glycol as the glycol component. Here, "mainly" or "main" means that the content of furandicarboxylic acid is 80 mol% or more in 100 mol% of the entire dicarboxylic acid component, and that the content of ethylene glycol is 80 mol% or more in 100 mol% of the entire glycol component. In 100 mol% of the entire dicarboxylic acid component, the content of furandicarboxylic acid is preferably 90 mol% or more, and more preferably 95 mol% or more. In 100 mol% of the entire glycol component, the content of ethylene glycol is preferably 90 mol% or more, and more preferably 95 mol% or more.
As long as the objective of the present invention is not hindered, a dicarboxylic acid component other than furandicarboxylic acid and a glycol component other than ethylene glycol may be copolymerized. The copolymerization amount of the dicarboxylic acid component other than furandicarboxylic acid is, with respect to the entire dicarboxylic acid component, less than 20 mol%, preferably less than 10 mol%, and particularly preferably less than 5 mol%. The copolymerization amount of the glycol component other than ethylene glycol is, with respect to the entire glycol component, less than 20 mol%, preferably less than 10 mol%, and particularly preferably less than 5 mol%.
Examples of dicarboxylic acid components other than furandicarboxylic acid include aromatic dicarboxylic acids such as terephthalic acid, isophthalic acid, phthalic acid, naphthalene dicarboxylic acid, 4,4'-dicarboxybiphenyl, and sodium 5-sulfoisophthalate; alicyclic dicarboxylic acids such as 1,4-cyclohexanedicarboxylic acid, 1,3-cyclohexanedicarboxylic acid, 1,2-cyclohexanedicarboxylic acid, 2,5-norbomenedicarboxylic acid, and tetrahydrophthalic acid; and aliphatic dicarboxylic acids such as oxalic acid, malonic acid, succinic acid, adipic acid, azelaic acid, sebacic acid, undecanedioic acid, dodecanedioic acid, octadecanedioic acid, fumaric acid, maleic acid, itaconic acid, mesaconic acid, citraconic acid, and dimer acid; and the like.
Examples of glycol components other than ethylene glycol include aliphatic glycols such as 1,2-propanediol, 1,3-propanediol, 1,2-butanediol, 1,3-butanediol, 1,4-butanediol, 2-methyl-1,3-propanediol, 2-amino-2-ethyl-1,3-propanediol, 2-amino-2-methyl-1,3-propanediol, 1,10-decanediol, dimethyloltricyclodecane, diethylene glycol, and triethylene glycol; ethylene oxide adducts or propylene oxide adducts of bisphenol A, bisphenol S, bisphenol C, bisphenol Z, bisphenol AP, and 4,4'-biphenol; alicyclic glycols such as 1,2-cyclohexanedimethanol, 1,3-cyclohexanedimethanol, and 1,4-cyclohexanedimethanol; and the like.

< Polyethylene furandicarboxylate-based resin >

A polymerization method for a polyethylene furandicarboxylate-based resin can employ any optional production method such as a direct polymerization method in which a furandicarboxylic acid, ethylene glycol and, if necessary, other dicarboxylic acid components and other glycol components are reacted directly, and a transesterification method in which a dimethyl ester of a furandicarboxylic acid (including dimethyl esters of other dicarboxylic acids, if necessary) and ethylene glycol (including other glycol components, if necessary) are subject to a transesterification reaction.

The intrinsic viscosity of the polyethylene furandicarboxylate-based resin is preferably 0.30 dl/g or more and 1.20 dl/g or less, more preferably 0.55 dl/g or more and 1.00 dl/g or less, and further preferably 0.70 dl/g or more and 0.95 dl/g or less. When the intrinsic viscosity is lower than 0.30 dl/g, the polyester film may be torn. On the other hand, when the intrinsic viscosity is higher than 1.20 dl/g, filtration pressure increase becomes large, causing difficulty in high-precision-filtration, whereby extrusion of the resin through the filter may become difficult, or the effect of enhancing mechanical properties may be saturated.

The content of a cyclic dimer in the polyethylene furandicarboxylate-based resin is preferably 1.0 mass% or less, more preferably 0.7 mass% or less, and further preferably 0.5 mass% or less. In an extrusion step during film manufacture, the polyethylene furandicarboxylate-based resin is melted, and the cyclic dimer is regenerated during the melting, and thus, the content of the cyclic dimer in the polyethylene furandicarboxylate-based resin is preferably 1.0 mass% or less. The lower the content of the cyclic dimer in the polyethylene furandicarboxylate-based resin, the better. However, due to technical difficulty, the practical lower limit is 0.1 mass%.

<Additive>

As long as the objective of the present invention is not hindered, the polyester film of the present invention may contain an additive. As the additive to be used in the present invention, inert particles such as inorganic particles, organic particles, heat-resistant polymer particles, and crosslinked polymer particles, a fluorescent brightening agent, a UV inhibitor, an infrared absorbing pigment, a surfactant, an antioxidant, a heat stabilizer, and the like are selected according to the objective of use. As the additive, only one type may be contained, or two or more types may be contained. As long as physical properties of the polyester film to be obtained are not hindered, the timing of adding the additive is not particularly limited.

The inert particles are preferably at least one type selected from the group consisting of inorganic particles and organic particles. As the above inorganic particles, any-desired inorganic particles may be selected, and examples thereof include silica, calcium carbonate, barium sulfate, calcium sulfate, alumina, kaolinite, talc, and the like. Especially, from the viewpoint of transparency, silica particles are suitable, and irregular-shaped silica particles, having a refractive index relatively close to that of the resin component, are particularly suitable.

The average particle diameter of the above inorganic particles is preferably 1 to 10 $\mu$m, more preferably 1.5 to 7 $\mu$m, and further preferably 2 to 5 $\mu$m. When the average particle diameter of the inorganic particles is 1 $\mu$m or more, an uneven structure suitable for imparting easy-slipping properties can be provided to the surface. On the other hand, when the average particle diameter of the inorganic particles is 10 $\mu$m or less, high transparency can be maintained. The content of the inert particles in polyester is preferably 0.005 to 1.0 mass% and more preferably 0.008 to 0.5 mass%. When the content of fine particles is 0.005 mass% or more, an uneven structure suitable for imparting easy-slipping properties can be provided to the surface of a surface layer. On the other hand, when the content of fine particles is 1.0 mass% or less, high transparency can be maintained.

As the above UV absorber, any-desired UV absorber can be selected, and such a UV absorber may be selected, to be used, from known UV absorbers according to the objective of use. Examples of the above UV absorber include organic-based UV absorbers such as a benzotriazole-based compound and a benzophenone-based compound, inorganic-based UV absorbers such as zinc oxide, titanium oxide, and cerium oxide in the form of fine particles having a particle diameter of 0.2 $\mu$m or less, and the like. As the above antioxidant, any-desired antioxidant can be selected, and examples thereof include aromatic amine-based antioxidants, phenol-based antioxidants, and the like. Examples of the above heat stabilizer include phosphorus-based heat stabilizers such as phosphoric acid-based heat stabilizers and phosphoric ester-based heat stabilizers, sulfur-based heat stabilizers, amine-based heat stabilizers, and the like.

<Physical properties of polyester film>

The intrinsic viscosity of the polyester film of the present invention is preferably 0.30 dl/g or more and 1.20 dl/g or less, more preferably 0.40 dl/g or more and 1.00 dl/g or less, and further preferably 0.50 dl/g or more and 0.80 dl/g or less. When the intrinsic viscosity is less than 0.30 dl/g, the polyester film may be torn. On the other hand, when the intrinsic viscosity is more than 1.20 dl/g, the effect of enhancing mechanical properties may be saturated.

A plane orientation coefficient $\Delta$P of the polyester film of the present invention is 0.100 or more and 0.170 or less, preferably 0.110 or more and 0.160 or less, and more preferably 0.120 or more and 0.160 or less. With respect to the plane orientation coefficient, according to JIS K 7142-1996 5.1 (Method A), a refractive index nx in the machine direction (MD direction) in the film plane, a refractive index ny in the direction (TD direction) perpendicular thereto, and a refractive index nz in the thickness direction are measured by an Abbe refractometer while using a sodium D line as a light source, and the plane orientation coefficient ΔP can be calculated by the following formula.

$$\Delta P = \{(nx+ny)-2nz\}/2$$

nx and ny are both preferably 1.570 or more, more preferably 1.580 or more, further preferably 1.590 or more, still further preferably 1.600 or more, particularly preferably 1.610 or more, and most preferably 1.620 or more. When nx and ny are 1.570 or more, sufficient film breaking strength and breaking elongation can be obtained. Thus, mechanical properties of the film become sufficient, post-processing such as printing performed onto the film and bag making becomes easy, and when printing or coating is performed later, breakage, etc. of the film on a printer or a coater is less likely to occur, which is preferable. From the viewpoint of manufacture and the heat shrinkage rate, nx and ny are preferably less than 1.700.

The haze of the polyester film of the present invention is 15% or less. When the haze is 15% or less, turbidity of the film becomes less, which facilitates inspection of defects of contents in food packaging usages. The haze is preferably 10% or less, more preferably 8% or less, further preferably 5% or less, and particularly preferably 3% or less. The lower the haze is, the more preferable. However, in view of the refractive index unique to the polyester film, the lower limit of the haze is 0.1%, for example.

When the haze of the polyester film of the present invention is defined as $Hz_0$ (%) and the haze after the polyester film is heated at 150°C for 30 minutes is defined as $Hz_{30}$ (%), a value ΔHz obtained by subtracting $HZ_0$ from $HZ_{30}$ is 15% or less, preferably 13% or less, and more preferably 10% or less. Since the polyester film of the present invention has a haze of 15% or less and ΔHz of 15% or less, the polyester film of the present invention is excellent in transparency, and whitening of the film when the polyester film has been heated is inhibited. In the case where ΔHz exceeds 15%, when heat treatment is performed in post-processing of the film, the cyclic dimer precipitates, causing contamination in the step. Thus, it is difficult to use the polyester film as a packaging film or an industrial film. Conversely, in the case where ΔHz is 15% or less, even when heat treatment is performed in the post-processing, contamination is less likely to be caused in the step, and in addition, whitening of the film is inhibited. Thus, the polyester film can be used as a packaging film or an industrial film. The lower limit of ΔHz is not particularly limited, but due to technical difficulty, is 0% or more and preferably 2% or more, for example.

The value of $HZ_{30}$ (the haze after the polyester film has been heated at 150°C for 30 minutes) is preferably 18% or less, more preferably 15% or less, and further preferably 12% or less. In the case where $HZ_{30}$ is 18% or less, even when heat treatment is performed in the post-processing, contamination is less likely to be caused in the step, and in addition, whitening of the film is inhibited. Thus, the polyester film is easily used as a packaging film or an industrial film. The lower limit of $HZ_{30}$ is not particularly limited, but due to technical difficulty, is 1% or more, for example.

In the polyester film of the present invention, the heat shrinkage rate when the polyester film has been heated at 150°C for 30 minutes (hereinafter, simply referred to as heat shrinkage rate) is, both in the MD direction and the TD direction, preferably 10% or less, more preferably 8% or less, and further preferably 5% or less. When the heat shrinkage rate is high, occurrence of shrinkage of the film on a printer or a coater may make it difficult to perform printing or coating, or poor appearance may be caused due to deformation of the film during high-temperature treatment, for example. Particularly, in a processing step using a printer or a coater, since there is no restraint between rolls that transport the film, the film easily shrinks in the width direction (TD direction), which easily causes poor appearance. The lower the heat shrinkage rate is, the more preferable. However, due to technical difficulty, the lower limit is 0.01%, for example.

In the present invention, the oxygen permeability of the polyester film at a temperature of 23°C and a humidity of 65% is not particularly limited, but is preferably 0.1 mL/m²/day/MPa or more and 1000 mL/m²/day/MPa or less, more preferably 0.1 mL/m²/day/MPa or more and 200 mL/m²/day/MPa or less, further preferably 0.1 mL/m²/day/MPa or more and 120 mL/m²/day/MPa or less, and still further preferably 0.1 mL/m²/day/MPa or more and 100 mL/m²/day/MPa or less. When the oxygen permeability exceeds 1000 mL/m²/day/MPa, if the polyester film is applied as a packaging film, substances are deteriorated due to oxygen having permeated through the film, or preservability of the food becomes poor. From the viewpoint of manufacture of the film, 0.1 mL/m²/day/MPa is considered to be the lower limit. If the film is subjected to a method such as printing or coating and a method such as co-extrusion, it is possible to further improve the oxygen permeability.

In the polyester film of the present invention, polyester itself having the furandicarboxylic acid unit has high oxygen barrier properties (low oxygen permeability), but if the polyester film of the present invention is a polyester film that satisfies a stretching step described later, or the polyester film of the present invention is a polyester film with a thin film layer having an inorganic compound as a main component, the oxygen barrier properties are further improved.

In the present invention, the water vapor permeability of the polyester film at a temperature of 37.8°C and a humidity of 90% is not particularly limited, but is preferably 0.1 $g/m^2/day$ or more and 40 $g/m^2/day$ or less, more preferably 30 $g/m^2/day$ or less, and further preferably 20 $g/m^2/day$ or less. When the water vapor permeability exceeds 40 $g/m^2/day$, substances may be deteriorated due to water vapor having permeated the film or preservability of the food may become poor. From the viewpoint of manufacture of the film, 0.1 $g/m^2/day$ is considered to be the lower limit. If the film is subjected to a method such as printing or coating and a method such as co-extrusion, it is possible to further improve the water vapor permeability.

In the polyester film of the present invention, polyester itself having the furandicarboxylic acid unit has high water vapor barrier properties (low water vapor permeability), but if the polyester film of the present invention is a polyester film that satisfies a stretching step described later, or the polyester film of the present invention is a polyester film with a thin film layer having an inorganic compound as a main component, the water vapor barrier properties are further improved.

The breaking strength of the polyester film of the present invention is preferably 75 MPa or more both in the MD direction and the TD direction. The breaking strength is, both in the MD direction and the TD direction, more preferably 100 MPa or more, further preferably 150 MPa or more, particularly preferably 200 MPa or more, and most preferably 220 MPa or more. When the breaking strength is less than 75 MPa, mechanical strength of the film becomes insufficient, which may cause defects such as elongation, displacement, etc. in the processing step of the film. In consideration of the manufacturing aspects, the upper limit of the breaking strength is 1000 MPa or less.

The breaking elongation of the polyester film of the present invention is preferably 10 to 300% both in the MD direction and the TD direction. When the breaking elongation is less than 10%, mechanical elongation of the film becomes insufficient, which may cause defects such as cracking, tearing, etc. in the processing step of the film. In consideration of manufacturing aspects, the upper limit of the breaking elongation is preferably 300% or less. The breaking elongation is, both in the MD direction and the TD direction, more preferably 15 to 150%, further preferably 20 to 100%, and particularly preferably 30 to 80%.

The coefficient of friction of the polyester film of the present invention is not particularly limited, but preferably, the coefficient of static friction ($\mu$s) is 1.0 or less and the coefficient of dynamic friction ($\mu$d) is 1.0 or less. The coefficient of static friction ($\mu$s) is more preferably 0.8 or less and further preferably 0.6 or less. The coefficient of dynamic friction ($\mu$d) is more preferably 0.8 or less and further preferably 0.6 or less. When the coefficient of static friction ($\mu$s) or the coefficient of dynamic friction ($\mu$d) exceeds 1.0, easy-slipping properties may be deteriorated, which may cause scratches or wrinkles due to abrasion during running of the film. The coefficient of static friction ($\mu$s) is the coefficient of static friction between one surface and the other surface of the multilayer polyester film of the present invention, and the coefficient of dynamic friction ($\mu$d) is the coefficient of dynamic friction between one surface and the other surface of the polyester film of the present invention.

The total light transmittance of the polyester film of the present invention is preferably 75% or more. When the total light transmittance is 75% or more, the accuracy of detection of internal foreign substances, which will become defects of the film, can be improved. The total light transmittance is more preferably 80% or more, further preferably 85% or more, particularly preferably 88% or more, and most preferably 88.5% or more. In order to improve the accuracy of detection of internal foreign substances, which will become defects of the film, the higher the total light transmittance, the better. However, 100% total light transmittance is technically difficult to be achieved, and the upper limit is 98%, for example.

The lower limit of impact strength, converted to a 15 $\mu$m-basis, of the polyester film of the present invention is not particularly limited, but is preferably 0.4 J/15 $\mu$m, more preferably 0.6 J/15 $\mu$m, and further preferably 0.8 J/15 $\mu$m. When the impact strength is less than 0.4 J/15 $\mu$m, if the polyester film is to be used as a bag, strength may be insufficient. The upper limit of the impact strength (impact resistance) is preferably 3.0 J/15 $\mu$m, and when the impact strength exceeds 3.0 J/15 $\mu$m, improvement effects are saturated.

The thickness of the polyester film of the present invention is 1 to 300 $\mu$m, preferably 5 to 200 $\mu$m, more preferably 10 to 100 $\mu$m, and further preferably 10 to 40 $\mu$m. When the thickness exceeds 300 $\mu$m, there is a problem in terms of cost, and when the polyester film is used as a packaging material, visibility tends to decrease. When the thickness is less than 1 $\mu$m, mechanical properties deteriorate, and the function as a film may fail to be exhibited.

The content of the cyclic dimer in the polyester film of the present invention (the content of the cyclic dimer with respect to the entirety of the polyester film of the present invention) is preferably 1.05 mass% or less. The content of the cyclic dimer is more preferably 1.0 mass% or less, further preferably 0.9 mass% or less, and particularly preferably 0.8 mass% or less. The present inventors found that the cyclic dimer having precipitated on the film surface causes a foreign substance in which the cyclic dimer serves as a nucleus, whereby the film is whitened. When the content of the cyclic dimer is 1.05 mass% or less, the cyclic dimer is less likely to precipitate in a post-processing step of the film, thus is less likely to cause contamination in the step, and thus, is less likely to cause defects even when, for example, printing or lamination processing is performed. In addition, it was found that, since the cyclic dimer that precipitates on the film even when heated is small in amount, whitening of the film is less likely to occur. Details of the measurement method of the content of the cyclic dimer will be described later, and the measurement is performed according to HPLC analysis. However, when the NMR method is used as well, a value of a similar level is obtained.

The polyester film of the present invention may have a single layer or a laminate configuration of a plurality of layers, but preferably has a laminate configuration of three layers or more. For example, when the outermost layer is defined as a layer B and a layer D, and the layer other than the outermost layer is defined as a layer A and a layer C, conceivable layer configurations in the film thickness direction are layer B/layer A/layer B, layer B/layer A/layer D, layer B/layer A/layer C/layer B, layer B/layer A/layer C/layer D, layer B/layer A/layer C/layer A/layer B, and the like. The layers A to D may have the same resin composition or different resin compositions, but preferably have the same resin composition or a configuration of layer B/layer A/layer B (two kind-three-layer configuration). The method for manufacturing the polyester film having a laminate configuration is not particularly limited, but the polyester film can be manufactured by a co-extrusion method, for example.

The polyester in which the amount of the cyclic dimer has been reduced as described above is applicable to each layer of the film. Preferably, the polyester having the reduced amount of the cyclic dimer is used at at least one surface, and more preferably, the polyester having the reduced amount of the cyclic dimer is used at both surfaces. The content of the cyclic dimer at at least one surface (preferably, both surfaces) is preferably 1.0 mass% or less, more preferably 0.9 mass% or less, and further preferably 0.8 mass% or less. As another suitable mode, even when the content of the cyclic dimer in the entirety of the film is larger than 0.9 mass% (preferably more than 0.9 mass% and 1.5 mass% or less), if the content of the cyclic dimer at the surface is 0.9 mass% or less (preferably 0.8 mass% or less), precipitation of the cyclic dimer at the film surface can be inhibited. The lower the content of the cyclic dimer, the better. However, due to technical difficulty, for example, the content of the cyclic dimer at at least one surface (preferably both surfaces) is 0.2 mass% or more. The "content of the cyclic dimer at the surface" denotes the content of the cyclic dimer from the surface to a thickness of 1 $\mu$m.

As described above, the polyester film of the present invention may contain an additive, and in the case of a laminate configuration of a plurality of layers, it is possible to use a polyethylene furandicarboxylate-based resin layer containing the additive only in the surface layer. For example, such a film may have a three-layer configuration (b/a/b) in which a surface layer (layer b) containing the additive is laminated, by a co-extrusion method, on both surfaces of a center layer (layer a), or may have a three-layer configuration (b/c/b) in which the additive is contained in both of the center layer (layer c) and the surface layer and in which the concentrations of the additives of the respective layers are differentiated.

<Method for manufacturing polyester resin>

In the following, a polyester resin manufacturing method used in manufacture of the polyester film of the present invention will be described, but is not limited to the method below.

In the polyester resin manufacturing method used in the present invention, melt-polymerization is performed, then, a preliminary crystallization process is performed, and subsequently, a solid phase polymerization is performed, whereby the cyclic dimer in the polyester resin can be reduced.

<Melt-polymerization of polyester resin>

For the conditions of temperature, time, pressure, and the like in esterification reaction between dicarboxylic acid and diol and transesterification between the dicarboxylic acid ester and diol, ranges for a conventionally known polyester manufacturing method can be adopted. The manufacturing method described in International Publication No. WO 2021/172215 is particularly preferable, but the method is not limited to the manufacturing method in the above publication. In International Publication No. WO 2021/172215, a starting mixture containing 2,5-furandicarboxylic acid or a diester thereof and ethylene glycol is subjected to esterification reaction, to obtain a hydroxyethyl ester composition, and then, in the presence of a polycondensation catalyst, the hydroxyethyl ester composition is subjected to polycondensation reaction under a reduced pressure condition, to obtain a polycondensate. The above polycondensation catalyst contains an aluminum compound and a phosphorus compound, and the above phosphorus compound contains one or more compounds selected from the group consisting of a phosphoric acid-based compound containing an aromatic group and a phosphinic acid-based compound containing an aromatic group.

<Preliminary crystallization of polyester resin>

If, after melt-polymerization, the temperature is rapidly increased to the reaction temperature of solid phase polymerization, the surface of the polyester resin may partially be melted and the resins adhere to each other to form lumps, which may cause difficulty in handling or difficulty in advancement of solid phase polymerization reaction. Therefore, it is preferable to start heating from about 80 to 100°C and gradually increase the temperature to about 150 to 180°C, thereby causing the surface of the polyester resin to be preliminarily crystallized. However, since the resin undergoes coloration if preliminary crystallization is performed for a long time, the preliminary crystallization needs to be performed in a short time. In the description of the preliminary crystallization, "polyester resin" means the polyester resin immediately after the melt-polymerization.

When influence on the later-performed solid phase polymerization step and film forming step and the film quality is taken into consideration, it is preferable that, as the preliminary crystallization process, the polyester resin and an inert gas in a supercritical state are caused to coexist, to be subjected to heat treatment, and then, pressure reduction is performed from the gas pressure in the supercritical state to the atmospheric pressure. In order to inhibit generation of the cyclic dimer, it is particularly important to use an inert gas in a supercritical state. In order to shorten the preliminary crystallization time, a known method such as a method in which a crystal nucleating agent is added in the polyester resin or a method in which crystallization is accelerated by using a solvent, may be used as appropriate.

Since the inert gas dissolves into and plasticizes the polyester resin, the crystallization behavior during the treatment using the inert gas under a high pressure is different from the crystallization behavior under a normal atmospheric pressure. Therefore, the heat treatment temperature is set to be preferably the crystallization temperature - 70°C to the crystallization temperature + 10°C, more preferably the crystallization temperature - 60°C to the crystallization temperature, further preferably the crystallization temperature - 35°C or more and the crystallization temperature - 5°C or less, particularly preferably the crystallization temperature - 30°C or more and the crystallization temperature - 10°C or less, and most preferably the crystallization temperature - 25°C or more and the crystallization temperature - 15°C or less. The measurement method for the crystallization temperature will be described later.

The inert gas is not particularly limited as long as the inert gas does not activate the polyester resin. Examples thereof include oxygen, methane, propane, nitrogen dioxide, nitrogen, argon, helium, carbon dioxide, and the like. Among them, carbon dioxide is preferably used. Depending on the compound, carbon dioxide may react and cannot be used as the inert gas. However, in the present specification, "inert gas" means a gas that does not activate the polyester resin.

When the pressure during the heat treatment is high, the inert gas dissolves into and plasticizes the polyester resin, and as a result, crystallization in a short time is possible. Therefore, the pressure during the heat treatment is preferably 5 MPa or more, more preferably 8 MPa or more, further preferably 10 MPa or more, particularly preferably 15 MPa or more, and most preferably 18 MPa or more. The upper limit of the pressure during the heat treatment is not particularly limited, and is 50 MPa or less, for example. A reaction vessel that can endure a pressure exceeding 50 MPa needs to have a very large metal thickness, and thus is not realistic.

In order to make the pressure during the heat treatment higher than the atmospheric pressure, the following method may be adopted. That is, for example, the polyester resin is put in a high-pressure reaction vessel, and the high-pressure reaction vessel is connected to a gas cylinder, a pump, a pressure relief valve, a pressure gauge, a safety valve, and the like. After the temperature of the high-pressure reaction vessel has been increased to a predetermined temperature, the inert gas is sent through the pump, and adjustment is performed by the pressure relief valve so as to attain a predetermined pressure.

The heat treatment time is preferably 10 minutes or more, more preferably 15 minutes or more, further preferably 20 minutes or more, and particularly preferably 25 minutes or more. If the heat treatment time is 10 minutes or more, the inert gas can be sufficiently dissolved into the polyester resin. The heat treatment time is not particularly limited, and the heat treatment time is, for example, 200 minutes or less, preferably 180 minutes or less, and more preferably 150 minutes or less. If the heat treatment time exceeds 200 minutes, the effect of increasing the crystallinity becomes saturated.

A time necessary for pressure reduction from a gas pressure in the supercritical state to an atmospheric pressure is preferably from 0.5 minutes to 20 minutes, more preferably from 1.5 minutes to 10 minutes, and further preferably from 3 minutes to 5 minutes.

A rate at which pressure is reduced from a gas pressure in the supercritical state to an atmospheric pressure is preferably from 1 MPa/min to 30 MPa/min, more preferably from 2 MPa/min to 25 MPa/min, further preferably from 3 MPa/min to 15 MPa/min, particularly preferably from 4 MPa/min to 10 MPa/min, and most preferably from 5 MPa/min to 7 MPa/min.

<Solid phase polymerization of polyester resin>

The method of solid phase polymerization is not particularly limited, and examples thereof include a method in which the polyester resin obtained in the polycondensation reaction step described above is heated in an inert gas atmosphere or in a reduced pressure. As for the inert gas, a gas that can be used in the preliminary crystallization may be used as appropriate, and preferably, the same inert gas as that in the preliminary crystallization is used. The solid phase polymerization may be performed in a state where pellets or powder of the polyester resin is left at rest or in a state of being stirred. In the case of stirring, the stirring may be performed with a stirring blade set in a reaction container, or may be performed by moving the reaction container.

From the viewpoint of reducing the amount of the cyclic dimer, the reaction temperature of the solid phase polymerization is preferably high, preferably 180°C or more, and more preferably 190°C or more. The upper limit of the reaction temperature is the melting point of the polyester resin. The reaction time of the solid phase polymerization is preferably 1 hour or more and more preferably 3 hours or more. On the other hand, since coloration may occur, the reaction time is preferably 50 hours or less, more preferably 40 hours or less, and further preferably 30 hours or less.

<Method for manufacturing polyester film>

A method for manufacturing the polyester film of the present invention will be described. First, the polyester resin in the form of PEF pellets or PEF chips is dried or hot-air dried so as to have a moisture content of less than 200 ppm. Next, respective raw materials are weighed, mixed, supplied to an extruder, and melt-extruded into a sheet shape. Further, the sheet in a melted state is brought into close contact with a rotary metal roll (casting roll) by using an electrostatic application method, to be cooled and solidified, whereby an unstretched film (unstretched sheet) is obtained.

At a point where the melted resin is kept at the melting point + 5°C to the melting point + 60°C, high-precision-filtration can be performed in order to remove foreign substances contained in the resin. The filter used for high-precision-filtration of the melted resin is not particularly limited, but if the filter is made of a stainless sintered body, the filter has excellent performance of removing high-melting-point organics or aggregates containing Si, Ti, Sb, Ge, or Cu as a main component, and thus is suitable.

When a laminate configuration of three layers or more is formed by a co-extrusion method, two or more extruders are used to extrude the raw materials of the layers, both layers are merged by using a multi-layer feed block (for example, a merging block having an angular merging part), to be extruded from a slit-shaped die into a sheet shape, and cooled and solidified on a casting roll, whereby an unstretched film is made. Instead of using the multi-layer feed block, a multi-manifold die may be used.

Even when the preliminary crystallization and the solid phase polymerization have been performed to reduce the amount of the cyclic dimer in the polyester resin, the amount of the cyclic dimer increases in the step in which the polyester resin is melted and melt-extruded into a sheet shape. Therefore, it is also important to inhibit increase in the amount of the cyclic dimer in the step of manufacturing the film using the polyester resin. When the time from when the resin comes into contact with the screw of the extruder and melts, to when a sheet-shaped resin is extruded from the die is defined as a melt line residence time, if the melt line residence time is shortened, thermal decomposition during melt extrusion is inhibited, and thus, increase of the cyclic dimer can be inhibited. The melt line residence time is preferably 10 minutes or less, more preferably 8 minutes or less, further preferably 5 minutes or less, and particularly preferably 3 minutes or less. The lower limit is not particularly limited, but since the resin needs to be melted and uniformly kneaded to some extent, the practical lower limit is 1 minute or more.

The lower the resin temperature during the melt line residence is, the more the regeneration of the cyclic dimer during melt extrusion can be inhibited. The resin temperature is preferably the melting point of the polyester resin + 60°C or less, and more preferably the melting point + 55°C or less. The lower limit is not particularly limited, but since the resin needs to be melted, the practical lower limit is the melting point + 5°C or more.

Next, the unstretched film obtained in the above-described manner is biaxially stretched and successively subjected to a heat treatment. For example, when producing a biaxially oriented polyester film by biaxially stretching the unstretched film having a furandicarboxylate unit, production of the biaxially oriented polyester film having a furandicarboxylate unit can employ a sequential biaxial stretching method in which uniaxial stretching is performed in MD direction or TD direction and then stretching is performed in the perpendicular direction; a simultaneous biaxial stretching method in which stretching is performed simultaneously in both MD direction and TD direction; and a method in which a linear motor is used as driving means at the time of simultaneous biaxial stretching. In the sequential biaxial stretching method, the MD stretching can be performed by making a speed difference with use of heating rolls, thereby stretching a sheet in MD direction. An infrared heater or the like may be used in combination for heating. The TD stretching to be carried out successively can be performed by leading the MD stretched sheet to a tenter, holding both edges of the stretched sheet with clips, and stretching the sheet in TD direction while heating it. The film resulting after the TD stretching is contiguously subjected to a heat treatment in the tenter. The heat treatment may be performed while the film is kept stretched in TD direction, or may be performed while the film is allowed to relax in TD direction. The film resulting after the heat treatment can be cut off at its both edges and then wound by a winder.

(i) Control of stretch ratio in MD direction of film

In order to obtain the polyester film of the present invention, to perform stretching in MD direction in a stretch ratio of 2.5 to 10.0 times is preferable. The stretch ratio in MD direction is more preferably 3.5 times or more, further preferably 3.8 times or more, particularly preferably 4.0 times or more, and most preferably 4.5 times or more. By setting the stretch ratio in MD direction to 2.5 times or more, it is possible to produce a film with excellent mechanical properties, having $\Delta P$ of 0.100 or more, a film breaking strength of 100 MPa or more, and a film breaking elongation of 15% or more. The stretch ratio in MD direction of 10.0 times or less is preferable because such a ratio lowers the frequency of breaking the film. The higher the stretch ratio in the MD direction, the higher the temperature of the heat setting process can be set, thereby reducing the heat shrinkage rate.

(ii) Control of stretch temperature in MD direction of film

In order to obtain the polyester film of the present invention, to perform stretching in MD direction at a temperature of 90°C or more and 150°C or less is preferable. The stretch temperature is further preferably 100°C or more and 125°C or less. The stretch temperature in MD direction of 90°C or more is preferable because such a temperature lowers the frequency of breaking the film. The stretch temperature of 150°C or less is preferable because such a temperature enables uniform stretching.

(iii) Control of stretch ratio in TD direction of film

In order to obtain the polyester film of the present invention, to perform stretching in TD direction in a stretch ratio of 2.5 to 10.0 times is preferable. The stretch ratio in TD direction is more preferably 3.0 times or more, further preferably 3.5 times or more, particularly preferably 4.0 times or more, and most preferably 4.5 times or more. By setting the stretch ratio in TD direction to 2.5 times or more, it is possible to produce a film with excellent mechanical properties, having $\Delta P$ of 0.100 or more, a film breaking strength of 100 MPa or more, and a film breaking elongation of 15% or more. The stretch ratio in TD direction of 10.0 times or less is preferable because such a ratio lowers the frequency of breaking the film.

(iv) Control of stretch temperature in TD direction of film

In order to obtain the polyester film of the present invention, to perform stretching in TD direction at a temperature of 80°C or more and 200°C or less is preferable. The stretch temperature is more preferably 95°C or more and 135°C or less. The stretch temperature in TD direction of 80°C or more is preferable because such a temperature lowers the frequency of breaking the film. The stretch temperature in TD direction of 200°C or less is preferable because such a temperature enables uniform stretching.

(v) Control of heat fixation temperature of film

In order to obtain the polyester film of the present invention, to perform a heat fixation treatment at 110°C or more and 220°C or less is preferable. The temperature of 220°C or less for the heat fixation treatment is preferable because such a temperature makes the film hardly become opaque and lowers the frequency of melt breaking of the film. Increasing the heat fixation temperature lowers the heat shrinkage rate, thus being preferable. Thus, the heat fixation temperature is more preferably 120°C or more, further preferably 140°C or more, further even more preferably 160°C or more, particularly preferably 175°C or more, and most preferably 185°C or more. The plane orientation coefficient $\Delta P$ tends to be increased by the heat fixation treatment. In addition, the heat fixation temperature is more preferably 210°C or less.

(vi) Control of heat fixation time of film

In order to obtain the polyester film of the present invention, to perform the heat fixation treatment for 5 to 20 seconds is preferable, to perform the heat fixation treatment for 7 to 15 seconds is more preferable, and to perform the heat fixation treatment for 8 to 12 seconds is further preferable. The length of the heat fixation time affects the plane orientation coefficient $\Delta P$.

(vii) Control of relaxation temperature in TD direction

In order to obtain the polyester film of the present invention, to perform a relaxation treatment in TD direction at 100°C or more and 200°C or less is preferable. The relaxation temperature in TD direction is preferably 165°C or more and 195°C or less and further preferably 175°C or more and 195°C or less. Relaxation at the above relaxation temperature can lower the heat shrinkage rate.

(viii) Control of relaxation ratio in TD direction

In order to obtain the polyester film of the present invention, to perform relaxation in TD direction at a relaxation ratio of 0.5% or more and 10.0% or less is preferable and to perform relaxation in TD direction at a relaxation ratio of 2% or more and 6% or less is more preferable. Relaxation at the above relaxation temperature can lower the heat shrinkage rate.

During the stretching step or after the completion of the stretching of the present film, a corona treatment or a plasma treatment may be performed. It is also possible to impart slipping property, anti-blocking property, antistatic property, easy adhesive property, etc. by coating solution or dispersion obtained by dissolving resin in a solvent or mixing resin with crosslinking agent, particles, etc. as appropriate in a solvent.

Moreover, with regard to the film subjected to stretching and a heat treatment, surface treatment can improve the functions of the film. Examples of the surface treatment include printing and coating.

The film subjected to stretching and a heat treatment or the film subjected to a surface treatment can be used for packaging bodies, labels, aesthetic sheets, etc. by being laminated to paper.

The present application claims benefit of priority to Japanese Patent Application No. 2023-048171 filed on March 24, 2023. The entire contents of the specification of Japanese Patent Application No. 2023-048171 filed on March 24, 2023 are incorporated herein by reference.

EXAMPLES

Hereinafter, the present invention will be described by means of Examples, however, the present invention is not limited to the Examples. The evaluation methods used in Examples and Comparative Examples are as follows.

<Evaluation method>

(1) Intrinsic viscosity (IV)

A polyester resin or a polyester film was crushed and dried, and then was dissolved into a mixed solvent of parachlorophenol/tetrachloroethane = 75/25 (mass ratio). Using an Ubbelohde viscometer, at 30°C, the flow-down time of the solution having a concentration of 0.4 g/dl and the flow-down time of the solvent alone were measured, and from the time ratio thereof, the intrinsic viscosity of the polyester resin or the polyester film was calculated by using the Huggins's formula, assuming that the Huggins's constant was 0.38.

(2) Crystallization temperature, melting point, and glass transition temperature

Using the differential scanning calorimeter (DSC 214 Polyma) manufactured by NETZSCH Japan K.K., the crystallization temperature, the melting point, and the glass transition temperature of the polyester resin were measured.

(3) Film thickness

Using Millitron, four 5 cm-square samples were cut out from arbitrary four places in the film to be measured, and measurement was performed at five positions per sample (20 positions in total), and the average value of the measurements was used as the film thickness.

(4) Breaking strength and breaking elongation

A strip-shaped sample having a length of 140 mm and a width of 10 mm in the respective MD direction and TD direction of the film was cut out using a single-edged razor. Next, the strip-shaped sample was pulled using AUTOGRAPH AG-IS (manufactured by Shimadzu Corporation), and the breaking strength (MPa) and the breaking elongation (%) in each direction were obtained from a load-strain curve having been obtained. The measurement was performed under conditions of a 25°C atmosphere, a distance between chucks of 40 mm, a crosshead speed of 100 mm/min, and a load cell of 1 kN. The breaking strength and the breaking elongation were each measured 5 times, and the average values of the measurements were used as the breaking strength and the breaking elongation of the film.

(5) Refractive index and plane orientation coefficient $\Delta P$

The refractive index nx in the MD direction in the film plane, the refractive index ny in the direction perpendicular thereto, and the refractive index nz in the thickness direction were measured by an Abbe refractometer while using a sodium D line as a light source according to JIS K 7142-1996 5.1 (Method A), and the plane orientation coefficient $\Delta P$ was calculated by the following formula. Measurement was performed 3 times, and the average values of the measurements were used as the refractive index and the plane orientation coefficient $\Delta P$ of the film. Methylene iodide was used as a mounting liquid.

$$\Delta P = \{(nx+ny)-2nz\}/2$$

(6) Total light transmittance and haze

Measurement was performed according to JIS K 7136. As the measuring device, an NDH-5000-type turbidimeter manufactured by NIPPON DENSHOKU INDUSTRIES Co., Ltd. was used.

(7) Haze change amount $\Delta Hz$

The film was cut out into a 50-mm square, and a pre-heating haze $Hz_0$ (%) was measured according to haze in JIS K 7105 "Testing methods for optical properties of plastics". As the measuring device, an NDH-300A-type turbidimeter manufactured by NIPPON DENSHOKU INDUSTRIES Co., Ltd. was used. After the measurement, the film was set in an oven heated at 150°C, the film was taken out after 30 minutes elapsed, and the haze of the film was measured by the same method as that for $Hz_0$, to obtain a post-heating haze $HZ_{30}$ (%). The value ($Hz_{30}$-$Hz_0$) obtained by subtracting $Hz_0$ from $HZ_{30}$ was used as $\Delta Hz$ (%).

(8) Heat shrinkage rate in MD direction and TD direction

The film was cut out so as to have a length of 250 mm in the measurement direction and a length of 10 mm in a direction perpendicular to the measurement direction. Marks were made at an interval of 150 mm in the measurement direction, the interval between the marks was measured under a constant tension of 5 gf, and the interval was defined as A (mm). Next, the cut-out film was put in an oven in an atmosphere set at 150°C and was subjected to heat treatment at 150 $\pm 3$°C for 30 minutes under no load, then, the interval between the marks under a constant tension of 5 gf was measured, and the interval was defined as B (mm). Using the values of the above A and B, the heat shrinkage rate was calculated by the following formula.

$$\text{Heat shrinkage rate (\%)} = (A\text{-}B)/A \times 100$$

(9) Amount of cyclic dimer contained in the entirety of film

The polyester film was finely crushed, and 50 mg of the crushed polyester film was dissolved in 1.5 ml of a mixed solvent of hexafluoroisopropanol (HFIP)/chloroform (2/3 (volume ratio)). 10 ml of chloroform was added to the obtained solution to be uniformly mixed. 5 ml of methanol was added to the obtained mixture, to allow a polymer to precipitate. Next, this mixture was filtered, and the obtained filtrate was concentrated and dried by a rotatory evaporator. 5 ml of dimethylformamide was added to the concentrated and dried matter, the filtrate was subjected to HPLC analysis, and the amount of the cyclic dimer was quantified.

HPLC analysis condition
Apparatus: UFLC manufactured by Shimadzu Corporation
Column: Imtakt Cadenza CD-C18 3 $\mu$m 2×150 mm
Mobile phase: A 0.1% formic acid, B acetonitrile
0 min (5%B)-18(35)-45(60)-50(100)-55(100)-55.01(5)-60(5)
Flow rate: 0.4 mL/min
Column temperature: 50°C
Injection amount: 5 $\mu$L
Detection wavelength: 258 nm

(10) Amount of cyclic dimer at the film surface

The polyester film was shaved to the thickness of 1 $\mu$m from the surface, and the amount of the cyclic dimer at the film surface was quantified by using the same method as that in (9) above.

(11) Color b* value

Evaluation was performed by using a ZE 6000-type color difference meter manufactured by NIPPON DENSHOKU INDUSTRIES Co., Ltd. Reflection measurement using a white plate was performed in a state where 10 films were stacked, and a value rounded to two decimal places was defined as a color b* value.

<Polyester raw material>

(1) Method for manufacturing PEF-A

To a starting mixture (the molar ratio of EG/FDCA was 1.5) of 2,5-furandicarboxylic acid (FDCA) and ethylene glycol (EG), 149 ppm of tetraethylammonium hydroxide (calculated as the mole ppm of $N(Et)_4OH$, based on the molar amount of FDCA) was added. While the temperature of the mixture was gradually increased from 80°C to 220°C, esterification was performed for 3.2 hours, volatile compounds such as water were distilled out, and then, a polycondensation catalyst and a phosphorus compound were added. As the polycondensation catalyst, an ethylene glycol solution of basic aluminum acetate was used and as the phosphorus compound, an ethylene glycol solution of diethyl 3,5-di-tert-butyl-4-hydroxybenzylphosphonate was used. The amount of aluminum based on the molar amount of FDCA in the starting mixture was 202 ppm, and the amount of diethyl 3,5-di-tert-butyl-4-hydroxybenzylphosphonate was 435 ppm. The temperature was increased from 220°C to 270°C, the pressure was reduced to 1 mmHg (about 133 Pa), and initial polycondensation was performed for 60 minutes. Further, later polycondensation was performed at about 13 Pa and 270°C for 119 minutes. At the end of polycondensation, the pressure was made to be normal pressure, and the polycondensate was passed in a strand shape through water, was cooled, and then cut, to obtain pellets. The pellets (raw material) were defined as PEF-A. Regarding the PEF-A, the intrinsic viscosity was 0.62 dL/g, the crystallization temperature was 170°C, the melting point was 215°C, the glass transition temperature was 86°C, and the amount of the cyclic dimer was 1.1 mass%.

(2) Method for manufacturing PEF-B

The PEF-A was dried under reduced pressure (1 Torr) at 80°C for 12 hours, and then, was put into a reaction container. Carbon dioxide was sent by a pump connected to a carbon dioxide cylinder and the pressure in the reaction container was adjusted so as to be 20 MPa with a pressure relief valve, and then, the preliminary crystallization process was performed at 150°C for 30 minutes. After the preliminary crystallization process, the pressure was reduced at 5 MPa/min to normal pressure, and then, the solid phase polymerization was performed at 190°C for 24 hours, to obtain PEF-B. Regarding the PEF-B, the intrinsic viscosity was 0.90 dL/g, and the amount of the cyclic dimer was 0.43 mass%.

(3) Method for manufacturing PEF-C

PEF-C was obtained through polymerization in the same manner as that for the PEF-A except that, as the additive, 0.05 mass% of silica particles (SYLYSIA 310 manufactured by FUJI SILYSIA CHEMICAL LTD., average particle diameter of 2.7 $\mu$m) were contained. Regarding the PEF-C, the intrinsic viscosity was 0.62 dL/g, the crystallization temperature was 170°C, the melting point was 215°C, the glass transition temperature was 86°C, and the amount of the cyclic dimer was 1.1 mass%.

(4) Method for manufacturing PEF-D

The PEF-C was dried under reduced pressure (1 Torr) at 80°C for 12 hours, and then, was put into a reaction container. Carbon dioxide was sent by a pump connected to a carbon dioxide cylinder and the pressure in the reaction container was adjusted so as to be 20 MPa with a pressure relief valve, and then, the preliminary crystallization process was performed at 150°C for 30 minutes. After the preliminary crystallization process, the pressure was reduced at 5 MPa/min to normal pressure, and then, the solid phase polymerization was performed at 190°C for 24 hours, to obtain PEF-D. Regarding the PEF-D, the intrinsic viscosity was 0.90 dL/g, and the amount of the cyclic dimer was 0.43 mass%.

(Example 1)

PEF-D was used as the raw material. The raw material was dried under reduced pressure (1 Torr) at 100°C for 24 hours to adjust the moisture content to 80 ppm, and then, the raw material was supplied to a twin-screw extruder (screw diameter of 30 mm, L/D = 25). While the resin temperature (resin temperature up to the gear pump) at the melting part, the kneading part, the piping, and the gear pump of the extruder was set at 268°C and the resin temperature at the piping after the gear pump was set at 270°C, the raw material supplied to the twin-screw extruder was melt-extruded into a sheet shape through a T-die (die). The time (hereinafter, referred to as melt line residence time) from when the resin came into contact with the screw of the extruder to when the sheet-shaped resin was extruded from the die was 3 minutes.
Then, the extruded resin was cast on a cooling drum having a surface temperature of 20°C, and was brought into close contact with the surface of the cooling drum by using an electrostatic application method, to be cooled and solidified, whereby an unstretched film having a thickness of 300 $\mu$m was produced.
The film temperature of the obtained unstretched film was increased using a group of rolls heated at 120°C, then, the film was stretched 5 times in the MD direction by a group of rolls having different circumferential speeds, and then, the obtained film was guided to a tenter, gripped by a clip, and subjected to TD stretching with the stretching temperature set to 105°C and the TD stretching ratio set to 5 times. Next, the film was subjected to heat treatment at 200°C for 12 seconds, and then, subjected to 5% relaxation treatment at 190°C, whereby a polyester film was obtained. The amount of the cyclic dimer contained in the entirety of the polyester film, and the amount of the cyclic dimer at the surface of the film were each 0.66 mass% (0.33 mol%). Physical properties of the obtained polyester film are shown in Table 2.

(Examples 2 to 5 and Comparative Examples 1 to 3)

Using the polyester raw material shown in Table 1, a polyester film was obtained by the same manufacturing method as that in Example 1 except that the resin temperature up to the filter and the melt line residence time were changed to the conditions described in Table 1. The physical properties of the obtained polyester film are shown in Table 2.

(Example 6)

As the raw material of the surface layer (layer B), the PEF-B was dried under reduced pressure (1 Torr) at 100°C for 24 hours, and then was supplied to an extruder 1. As the raw material of the intermediate layer (layer A), the PEF-A was dried under reduced pressure (1 Torr) at 100°C for 24 hours, and then was supplied to an extruder 2. While the resin temperature (resin temperature up to the filter) at the melting part, the kneading part, the polymer pipe, the gear pump, and the filter of the extruder was set to 268°C and the resin temperature at the polymer pipe thereafter was set to 270°C, the respective raw materials supplied to the extruder 1 and the extruder 2 were laminated by using a three-layer merging block so as to be B/A/B, and a sheet-shaped resin was melt-extruded through a die. In order to cause the thickness ratio of the respective layers to be B/A/B = 20/60/20, control was performed by using a gear pump for each layer. The melt line residence time was 3 minutes.
After the sheet-shaped resin was melt-extruded, the same manufacturing method as that in Example 1 was performed, whereby a polyester film was obtained. Physical properties of the obtained polyester film are shown in Table 2.

(Examples 7 to 8, Comparative Example 4)

Using the polyester raw material shown in Table 1, a polyester film was obtained by the same manufacturing method as that in Example 6 except that the thickness ratio of each layer, the resin temperature up to the filter, and the melt line residence time were changed to the conditions described in Table 1. Physical properties of the obtained polyester film are shown in Table 2.

[Table 1]

| Item | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Layer configuration | | (-) | A | A | A | A | A | B/A/B | B/A/B | B/A/B | A | A | A | B/A/B |
| Thickness ratio of each layer | | (%) | 100 | 100 | 100 | 100 | 100 | 20/60/20 | 20/60/20 | 10/80/10 | 100 | 100 | 100 | 3/94/3 |
| Raw material used | Layer A | type | PEF-D | PEF-B | PEF-C | PEF-D | PEF-D | PEF-B | PEF-C | PEF-C | PEF-A | PEF-C | PEF-D | PEF-C |
| | | (mass%) | 100 | 100 | 50 | 100 | 100 | 100 | 100 | 100 | 100 | 100 | 100 | 100 |
| | | type | - | - | PEF-D | - | - | - | - | - | - | - | - | - |
| | | (mass%) | - | - | 50 | - | - | - | - | - | - | - | - | - |
| | Layer B | type | - | - | - | - | - | PEF-D | PEF-D | PEF-D | - | - | - | PEF-D |
| | | (mass%) | - | - | - | - | - | 100 | 100 | 100 | - | - | - | 100 |
| Resin temperature | | (°C) | 268 | 268 | 268 | 259 | 268 | 268 | 268 | 268 | 268 | 268 | 286 | 268 |
| Melt line residence time | | (min) | 3 | 3 | 3 | 3 | 5 | 3 | 3 | 3 | 3 | 3 | 30 | 5 |

[Table 2]

| Item | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Intrinsic viscosity | | (d L/g) | 0.74 | 0.74 | 0.66 | 0.77 | 0.72 | 0.58 | 0.64 | 0.61 | 0.58 | 0.58 | 0.62 | 0.59 |
| Thickness | | (μm) | 16 | 16 | 16 | 16 | 16 | 16 | 16 | 16 | 16 | 16 | 16 | 16 |
| Breaking Strength | MD | (MPa) | 290 | 292 | 270 | 304 | 291 | 240 | 265 | 258 | 242 | 249 | 255 | 280 |
| | TD | (MPa) | 265 | 270 | 256 | 277 | 268 | 235 | 268 | 255 | 245 | 255 | 266 | 262 |
| Breaking Elongation | MD | (%) | 49 | 51 | 51 | 47 | 50 | 55 | 49 | 54 | 52 | 48 | 58 | 48 |
| | TD | (%) | 48 | 53 | 47 | 48 | 50 | 60 | 52 | 51 | 51 | 55 | 58 | 51 |
| Refractive index | Nx | (-) | 1.634 | 1.631 | 1.632 | 1.634 | 1.633 | 1.629 | 1.630 | 1.633 | 1.629 | 1.629 | 1.631 | 1.632 |
| | Ny | (-) | 1.624 | 1.622 | 1.622 | 1.624 | 1.624 | 1.620 | 1.621 | 1.623 | 1.621 | 1.621 | 1.623 | 1.622 |
| | Nz | (-) | 1.484 | 1.485 | 1.484 | 1.483 | 1.484 | 1.484 | 1.484 | 1.484 | 1.483 | 1.483 | 1.484 | 1.484 |
| Plane orientation coefficient ΔP | | (-) | 0.144 | 0.142 | 0.143 | 0.146 | 0.144 | 0.141 | 0.141 | 0.144 | 0.141 | 0.142 | 0.143 | 0.143 |
| Total light transmittance | | (%) | 88.8 | 89.2 | 88.8 | 88.8 | 88.8 | 88.9 | 88.7 | 88.9 | 89.4 | 88.6 | 88.6 | 88.7 |
| Haze | | (%) | 2.8 | 0.5 | 2.1 | 2.8 | 2.8 | 1.2 | 1.5 | 1.2 | 0.6 | 3.1 | 2.7 | 1.2 |
| Haze change amount ΔHz | | (%) | 6.8 | 9.8 | 12.0 | 6.2 | 9.1 | 7.0 | 6.9 | 8.0 | 18.8 | 18.0 | 18.0 | 17.0 |
| Heat shrinkage rate | MD | (%) | 3.3 | 3.3 | 3.3 | 3.3 | 3.3 | 3.3 | 3.3 | 3.3 | 3.3 | 3.3 | 3.3 | 3.3 |
| | TD | (%) | 4.3 | 4.3 | 4.3 | 4.3 | 4.3 | 4.3 | 4.3 | 4.3 | 4.3 | 4.3 | 4.3 | 4.3 |
| Amount of cyclic dimer | Entirety | (mass%) | 0.66 | 0.66 | 0.88 | 0.65 | 0.75 | 0.66 | 0.92 | 1.01 | 1.10 | 1.10 | 1.10 | 1.07 |
| | Surface | (mass%) | 0.66 | 0.66 | 0.88 | 0.65 | 0.75 | 0.66 | 0.66 | 0.71 | 1.10 | 1.10 | 1.10 | 1.02 |
| Color b* value | | (%) | 5.2 | 5.3 | 5.5 | 5.2 | 5.3 | 5.1 | 4.9 | 5.2 | 5.1 | 5.2 | 5.4 | 5.2 |

INDUSTRIAL APPLICABILITY

In the polyester film of the present invention, in spite of use of furandicarboxylic acid derived from biomass, the content of the cyclic dimer is low and transparency is less likely to decrease even if the polyester film is subjected to heating. Therefore, the polyester film of the present invention can be suitably used as an industrial film or a packaging film.

**Claims**

1. A polyester film comprising: a dicarboxylic acid component having furandicarboxylic acid as a main component; and a glycol component having ethylene glycol as a main component, the polyester film satisfying requirements (1) to (3) below,

   (1) a plane orientation coefficient $\Delta P$ is 0.100 or more and 0.170 or less,
   (2) a haze of the polyester film is 15% or less, and
   (3) when the haze of the polyester film is defined as $Hz_0$ (%) and the haze after the polyester film is heated at 150°C for 30 minutes is defined as $HZ_{30}$ (%), $Hz_{30}-Hz_0 \leq 15$ is satisfied.

2. The polyester film according to claim 1, further satisfying requirement (4) below,
   (4) a content of a cyclic dimer is 1.0 mass% or less.

3. The polyester film according to claim 1, further satisfying requirements (5) and (6) below,

   (5) the polyester film has a laminate configuration of three layers or more, and
   (6) at least one surface, a content of a cyclic dimer is 1.0 mass% or less.

## INTERNATIONAL SEARCH REPORT

International application No.

**PCT/JP2024/007310**

| A. | CLASSIFICATION OF SUBJECT MATTER |
|---|---|

*C08J 5/18*(2006.01)i; *B32B 27/36*(2006.01)i; *C08G 63/16*(2006.01)i
FI: C08J5/18 CFD; B32B27/36; C08G63/16

According to International Patent Classification (IPC) or to both national classification and IPC

| B. | FIELDS SEARCHED |
|---|---|

Minimum documentation searched (classification system followed by classification symbols)

C08J5/18; B32B27/36; C08G63/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2017/169553 A1 (TOYOBO CO., LTD.) 05 October 2017 (2017-10-05) claims, examples 1-13 | 1-3 |
| X | WO 2017/115737 A1 (TOYOBO CO., LTD.) 06 July 2017 (2017-07-06) claims, examples 1-11 | 1-3 |
| A | WO 2017/115736 A1 (TOYOBO CO., LTD.) 06 July 2017 (2017-07-06) comparative example 3 | 1-3 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/007310**

| Patent document cited in search report | | | Publication date (day/month/year) | Patent family member(s) | | | Publication date (day/month/year) |
|---|---|---|---|---|---|---|---|
| WO | 2017/169553 | A1 | 05 October 2017 | US | 2019/0106534 | A1 | |
| | | | | claims, examples 1-13 | | | |
| | | | | US | 2021/0147618 | A1 | |
| | | | | EP | 3438164 | A1 | |
| | | | | EP | 3848406 | A1 | |
| | | | | CN | 108884249 | A | |
| | | | | KR | 10-2018-0132728 | A | |
| | | | | BR | 112018069898 | A | |
| | | | | TW | 201807030 | A | |
| WO | 2017/115737 | A1 | 06 July 2017 | US | 2020/0269560 | A1 | |
| | | | | claims, examples 1-11 | | | |
| | | | | EP | 3398773 | A1 | |
| | | | | CN | 108430772 | A | |
| | | | | TW | 201736141 | A | |
| WO | 2017/115736 | A1 | 06 July 2017 | US | 2020/0269559 | A1 | |
| | | | | EP | 3398768 | A1 | |
| | | | | CN | 108472928 | A | |
| | | | | KR | 10-2018-0098557 | A | |
| | | | | TW | 201736140 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6440336 B
- JP 2022155579 A
- WO 2021172215 A
- JP 2023048171 A